# EUROPEAN PATENT APPLICATION

(11) **EP 1 239 389 A2**
(43) Date of publication of application: **11.09.2002**
(21) Application number: 01309471.9
(22) Date of filing: 08.11.2001
(51) Int. Cl.: G06F 17/60

(54) **Automated electronic communication system**

(30) Priority: 09.11.2000 GB 0027414
(71) Applicant: Enmark Systems Ltd, London W4 3TB (GB)
(72) Inventor: Korczynski, Andrzej Nicholas, London W4 3TB (GB)

(57) **Abstract**

An electronic communication system allows a user (12) to run several automated conversations simultaneously with a plurality of customers of other audience members (28). The possible conversational paths are predefined by means of a series of main and cascading follow-up documents, the sending of which is activated by triggers. A trigger may be based on either previous responses made by a particular audience member, or on one or more items of external data such as sales information, or on a combination. The system aids in maintaining and improving the loyalty of the target audience to the user.

## Description

The present invention relates to systems and methods for providing automated electronic communication. The invention particularly although not exclusively relates to methods and systems for enabling companies to retain and improve the loyalty of their customers, employees and/or members. Certain embodiments of the system find particular utility in the field of automated customer surveys.

Automated customer survey systems have long been known, as exemplified for example by WO-A-99/59096 and US-A-5893098. These documents illustrate systems that allow companies to communicate electronically with their customers, for example by e-mail or by means of programmable web pages, and to receive customer feedback to assist the company in its marketing, customer support and product development efforts.

Current systems such as these, however, structure their communications and particularly their customer survey questionnaires very much on an ad-hoc basis, so that operators dealing with the questionnaire responses have to deal with them on a customer by customer basis. Although US-A-5893098 does disclose the idea of "programmable questionnaires", in which customers may be asked different questions in dependence upon their answers to preceding questions, each questionnaire is dealt with on an individual basis, and has to be programmed separately from other questionnaires which may be going to other customers. Similarly, when the answers to the questionnaires are received, although the answers may be automatically fed into a main customer information database, operators have to interrogate the database individually on a customer by customer basis in order to determine what follow-up action the company needs to take for a particular customer.

It is an object of the present invention at least to alleviate the problems of the prior art, mentioned above.

It is a further object of the present invention to provide a system and method for automated electronic communication which is capable of handling correspondence with a large number of respondents, but at the same time reduces the need for human intervention by the system operator.

According to a first aspect of the present invention there is provided an automated electronic communication system for connection via a network with a plurality of correspondents, the system including a communications server for automatically generating and forwarding to a correspondent a series of personalised messages under control of a plurality of user-defined triggers.

According to a further aspect of the invention there is provided a method of automatically communicating with a plurality of remote correspondents including automatically generating and forwarding to each correspondent a series of personalised messages under control of a plurality of user-defined triggers.

The invention may be carried into practice in a number of ways and one specific embodiment will now be described, by way of example, with reference to the accompanying drawings in which:
Figure 1 is a schematic diagram of the preferred system;
Figure 2 shows an exemplary questionnaire;
Figure 3 illustrates the overview screen for a specific project;
Figure 4 shows how a trigger is implemented;
Figure 5 shows another trigger;
Figure 6 is a flow chart illustrating the overall process for setting up a communication project; and
Figure 7 is a flow chart illustrating the process for defining a trigger.

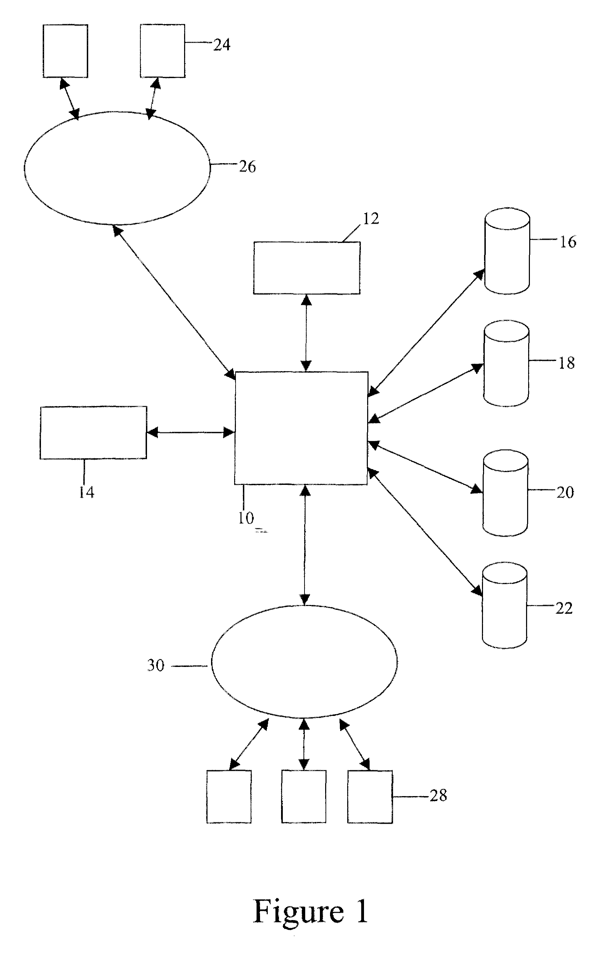

Turning first to Figure 1, there is illustrated a preferred embodiment of an automated electronic communication system according to the present invention. The purpose of the system is to facilitate two-way communication between the system owner (normally a company) and a target audience such as customers, employees, partners, distributors, suppliers, investors etc. Typically, the aim will be to build a loyal business community for the user company.

Customer loyalty, in this example, is built by designing and implementing two-way multi-step automated "conversations" between the company and its customers. Each "conversation" can be predefined to follow a particular path or to proceed along one of a variety of different paths in dependence upon the interaction of the customer's responses to the communications and to the additional information that is being fed into the system from the external databases and other sources.

In the embodiment described, it will be assumed that the company is a sales organisation and that the target audience is its customers and potential customers. The aim of the company in that case will normally be to enhance and build customer loyalty, to prevent customers being lost, and to make effective use of marketing information to improve sales. It will be understood of course that the system is not limited merely to those tasks, or to that particular target audience.

The automated electronic communication system of the preferred embodiment is implemented primarily in software, running on a server 10. The system is arranged to receive information from, and be controlled by, a human operator 12, a document library 14, a sales information database 16, a customer database 18, and a communications response database 20. One or more other databases 22 (either inside or outside the user organisation) may provide external information. The type, location and number of the databases which feed information into the system will of course vary with the application and will not necessarily be identical with those described here. For example, if the target audience are investors in the user company, the company will no doubt wish to make use of real time financial information. In a sales environment in which sales are affected by the weather, the database 22 might provide actual or predicted meteorological information; in a banking environment, stock exchange data may be used, etc.

Other departments 24 within the company (for example the marketing department) may feed company-related information into the system via the company WAN or LAN 26.

The system communicates with the customers 28 (or, more generally, its correspondents) via any convenient network 30 such as the Internet, Intranet, the public telephone system, a mobile telephone network (WAP), television broadcast, satellite and so on. The user interface for the customer 28 could be any convenient device, such as for example PC, terminal, mobile telephone, hand-held device, television with response facilities and so on.

Conversations between the system and the individual customers proceed by transfer via the network 30 of a sequence of individual messages, communications or "documents", at least some of which require a response from the customer. Each document may be tailored either for an individual customer or for a group of customers on the basis of the customer's previous replies (as stored in the database 20) and/or the external information (eg business events) that is being fed in from the databases and other sources. Documents may also be tailored in accordance with profile data, eg the customer's location, type of business, preferred language and so on. Thus, the content of each document may automatically change depending upon, for example, the geographical location of the customer, the amount the customer has spent in the last year, the typical buying profile of the customer, the job title of the person the document is addressed to within the customer's organisation and so on. Documents are not necessarily sent to all customers at once, but to individual customers or groups of customers, in dependence upon similar parameters.

The sending of documents may be initiated in a number of ways. The user 12 or one of the company departments 24 may have items of news, research or other information which they wish disseminate to their audience. Alternatively, the system may generate and send communications or activate an activity automatically on the occurrence of one or more "trigger events". These trigger events (which will be described in more detail below) allow the system to communicate with the customers largely automatically. Triggers may be defined for internal or external events: respectively, for example, no correspondence having been received from a previously good customer for over a month, and on the recording of a sale within the sales database 16.

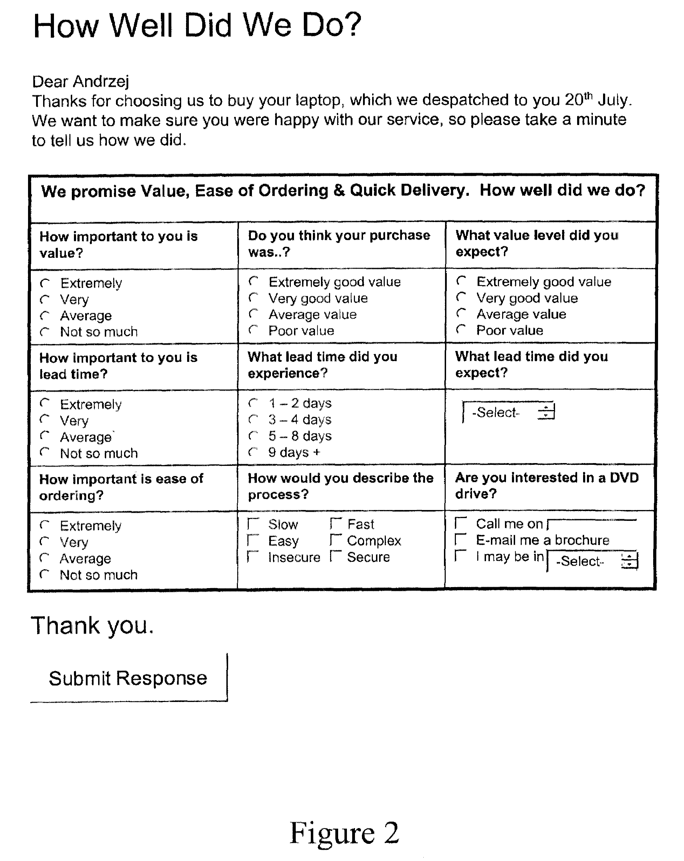

A simple example of a document sent from the system to a customer is shown in Figure 2. In this example, a sale has been made to the customer, and the document requests feedback on the sale. The document may conveniently be constructed in HTML and e-mailed to the customer, for example one week after the sale was made. The customer opens the document in his e-mail client (which of course in this example needs to be able to comprehend HTML), answers the questions and then simply clicks on the "submit response" button. The button has code behind it which causes the completed form to be e-mailed back to the company. The reply is automatic once the customer has clicked on the button, and there is no need to go through the normal sequence of clicking on "reply" and then "send" within the e-mail client.

The information sent back to the system when the "submit response" button is pressed includes the identity of the responding person (this may be an e-mail address, a telephone number or some other identifier), the identifier of the document which is being responded to, details of the prompts or questions which are being responded to, and details of the individual responses to each prompt or question.

Alternatively, although it is not preferred, the response could be effected by some mechanism other than the clicking of a button, for example the speaking of a sound, the pressing of a keyboard key, or the pressing of a physical button or switch. It would also be possible for the document to be programmed to respond automatically after a certain period, whether or not the customer has responded to the questions.

The document shown in Figure 2 is extremely simple, but of course much more complex documents are possible. The document may for example include branching programming which tailors the questions asked of the customer in dependence upon the answers he has given to questions earlier in the document. This can avoid the need to send out too many follow-up questionnaires. The document could be entirely pre-defined, or it could consist of a user-defined template which will be filled in "on the fly" when the document is ready to be sent. The template can pull in information as needed from external sources, customer profiles etc and/or it may include controls for automatically modifying the document in dependence upon any of the types of information that may control a trigger (eg sales history, profiles etc).

The system includes a user-friendly front end which enables HTML or other programmed documents to be created without a need for any manual programming.

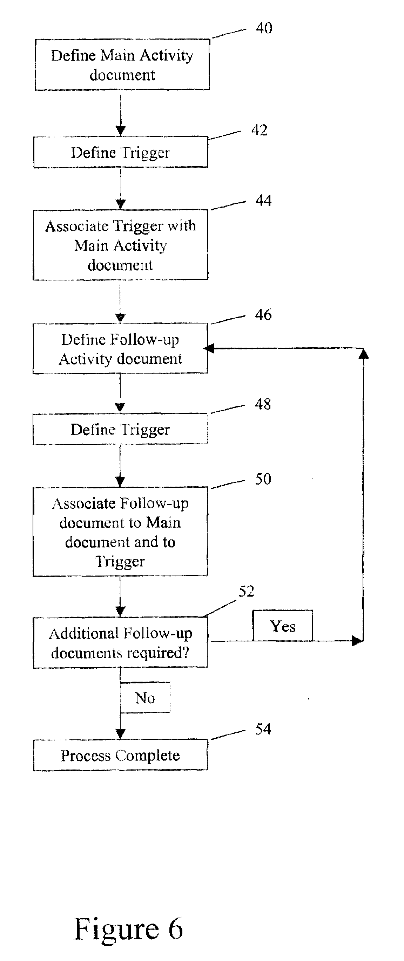

In order to use the system, the user 12 first needs to define and set up the controls for one or more conversations or "communications projects". Figure 6 illustrates schematically how a communication project is set up.

First, the user needs to define, at step 40, a main activity document. This will typically be the first document sent out to the customer, and will initiate the conversation. The document of Figure 2 is an example. As previously mentioned, the user does not program the document manually, but selects individual items via a user interface. The various possible items the user can select from are stored in the library 14. They may include, for example, a question identifier, question text, response type (radio button, tick box etc), number of possible responses, text of response 1, resulting action for response 1 such as update database only, update database and send e-mail, or update database and link to URL. Also provided by the library 14 is the additional information needed by the document for completion of the resulting action (for example the e-mail address or the URL).

The library 14 may in addition or alternatively include a list of predesigned forms, or parts of forms, which the user may simply select. The library may also contain a list of preferred questions and their possible answers.

Once the main activity document has been defined, the user then, at step 42, defines the trigger which is going to cause that document to be sent out to a particular customer or group of customers. Trigger definitions will be described in more detail below. The trigger could, of course, have been set up in advance and be merely linked in at step 42.

Next, at step 44, the trigger is associated to the main activity document.

At step 46, the user defines a follow-up activity document (or "sub-document"), which is a further document that is going to be sent consequent upon the main activity document. The follow-up document may be either a further document to be sent to the customer, or alternatively a document to be sent elsewhere either within the organisation or outside. For example, the follow-up document might be an internal e-mail within the company to the customer's account manager suggesting that the customer should be contacted by telephone.

At step 48, a trigger is defined for the follow-up document, and at step 50 the follow-up document is associated with the main document and with the follow-up trigger. As shown at step 52, additional follow-up documents may be prepared, along with additional triggers, as necessary. It is possible for one trigger to activate multiple follow-up documents (for example to send a follow-up e-mail to the customer, and also to send a message internally to the customer's account manager). Likewise, there may be several follow-up documents associated with each main document.

Each follow-up document may have its own follow-up documents (in principle without any limitation of depth). The communications project, as a whole, may therefore define a cascading tree structure of documents, follow-up documents and sub-follow up documents, covering a large number of possibilities for the progress of the conversation defined by the project.

As explained above, unless instigated manually, each stage in the conversation is initiated by a trigger. A trigger is a predefined formula made up of specific responses to questions, profile data about recipients held by the company and/or externally generated information.

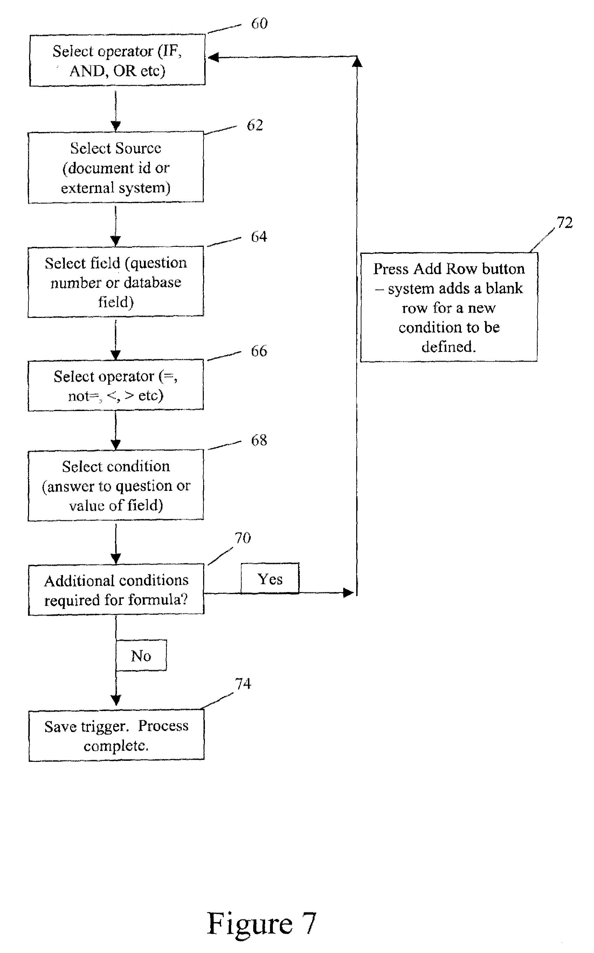

The method by which a trigger is defined is shown schematically in Figure 7. First, the user selects an operator (IF, AND, OR etc) followed by at step 62 an information source such as a document number or a database identifier. At step 64, a specific field within the source is then chosen. At step 66 an operator is chosen and at step 68 a condition such as for example the answer to a question or the value of a field.

If additional conditions are required to define the formula fully, the entire process may be repeated, as shown in steps 70 and 72. Once a trigger has been defined, it is saved at step 74.

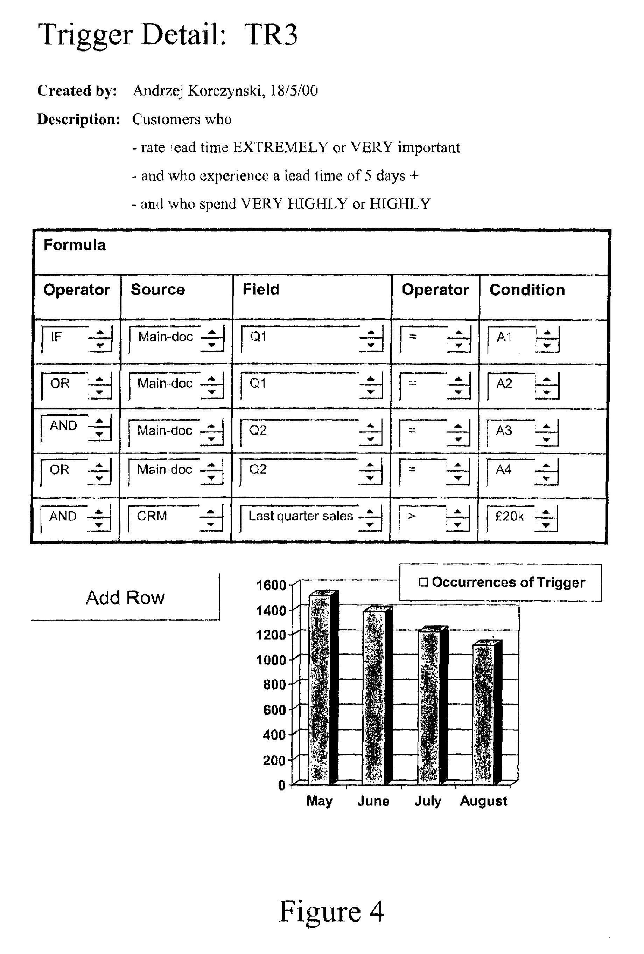

An exemplary trigger detail screen is shown in Figure 4. This trigger formula, which triggers a specific follow-up or sub document, looks for the following condition to arise:
1. the response to question 1 on the main activity document is answer 1 or answer 2; and
2. the response to question 2 on the main activity document is answer 3 or answer 4; and
3. the value of a field, stored on the customer record, called "CRM/last quarter sales" is greater than £20k.

It is possible for triggers to look for conditions across or between documents, because all answers are stored against each respondent, so that historical data can be combined with new data to look for specific conditions.

For example, a trigger could be defined as:
1. answer 1 to question 1 on the main document; and
2. answer 3 to question 7 on another document; and
3. CRM/last quarter sales is greater than £20k.

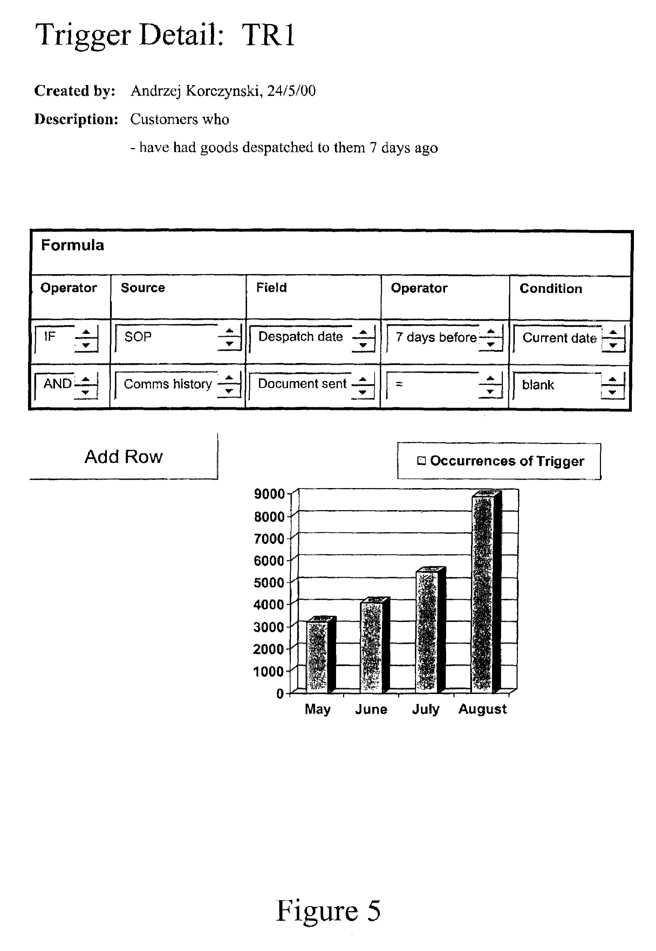

Another exemplary trigger is shown in Figure 5, this involving data which is being imported from external systems. In this particular example, the data represents transacted business with the customer which the user wishes to follow up.

The trigger shown in Figure 5 looks for the following condition:
1. data-fields imported from SOP (external Sales Order Processing system) onto the customer record show a goods despatch note with a date more than 7 days old; and
2. The communication history stored in the system against the customer record has a "blank" entry in the field "document sent" (ie the sale has not yet been followed up with a customer satisfaction survey document).
When the trigger is activated, the document is sent and the "document sent" field is completed with the date, so that the document will not be sent again.

In another example (not specifically illustrated) the user may wish to define a post-sales satisfaction survey document, to be sent to the customer after each purchase. The associated trigger may be capable of looking across historical versions of the same document and/or historical information relating to responses received. Thus, a trigger might be capable not only of looking at the content of previous messages received from the correspondent, but also upon whether or not the correspondent either did or did not respond at all. The trigger could also look at timing issues such as the time the document was sent, the time a response was received, and the time delay between those two events.

In the present example, the trigger looks at the historical responses to the post-sales satisfaction survey document for a specific correspondent, to determine whether, when the customer last made a purchase, the service was rated as being "poor". If the customer rates the service as "poor" again, after a new purchase, then the trigger is activated. It will be appreciated of course that in this instance, the customer has received the same document twice, but relating to two entirely different purchases. The system allows the user to decide how many historical responses to analyse when defining the trigger. The purpose, of course, is to look for patterns of consistency (eg to which customers do we continually fail to provide a satisfactory service?).

The sources, fields, operators and conditions required to set up a trigger will of course vary according to the application. The triggers required for a sales based organisation will of course be very different from those used by an investment bank. Generally, the trigger may be thought of as being defined by a multiplicity of different data-spaces, for example across documents, across time, across customer profiles and so on.

The trigger definition may include sampling information and instructions: for example that action should be taken only if the trigger conditions have been satisfied a certain number of times; or only if the conditions have been satisfied for fewer than a certain number of times; or only every so many occurrences; or at random; or any combination of these.

Where appropriate, the triggers may be defined so that documents are sent off only on a particular day or at a particular time. A company may find for example that after analysing sales information, customers are more responsive to documents sent on Friday afternoons than those sent on Monday mornings.

In operation, the system corresponds with the customers largely automatically, although as mentioned above provision is made for users to instigate communications manually.

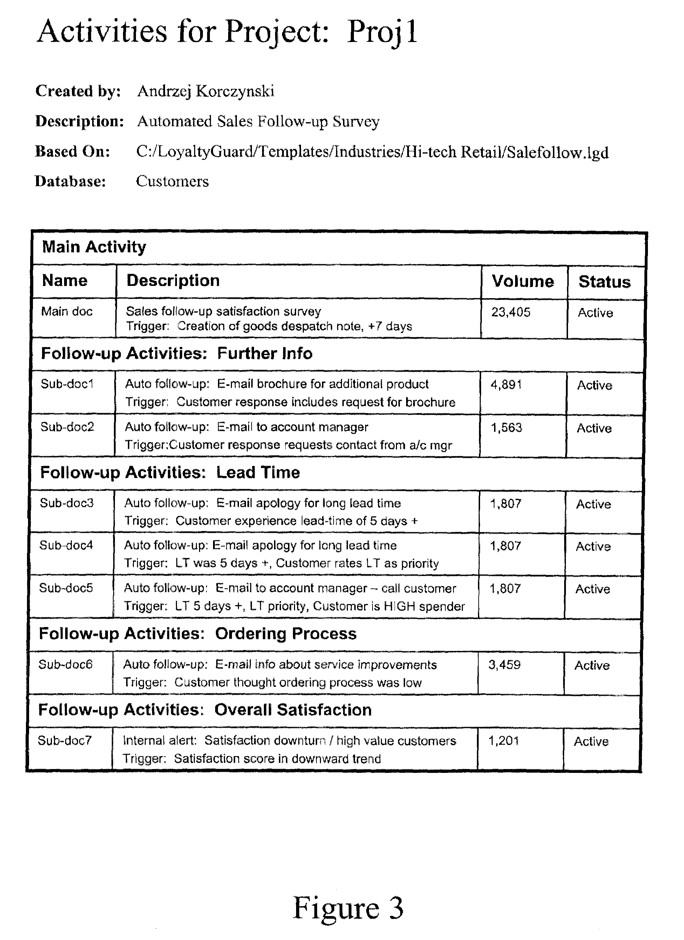

The user 12 can view the current status of each communication project on an activities screen, an example of which is shown at Figure 3.

As the project proceeds, the system records the number of times each trigger is activated, and reports: see the charts in Figures 4 and 5.

One of the ultimate aims of the system, of course, is to allow the user to extract and to act upon information contained within the multiple conversations that are taking place. This "feedback" aspect will now be considered in more detail.

The system provides the user with the ability to specify what defines a successful mailing, by means of success formulae or "scores". For each document type and question, the user can define score categories and scores for the resulting possible actions of the recipient. For example, a response received to a particular document may score ten points, a click-through on a URL mentioned within the document may score five points, a particular response to question 1 may score a further five points, and a different response may score twenty points.

The results of the mailing of each document are then reported by the system in a number of ways:
(a) responses received (absolute number and as a percentage of recipients);
(b) points resulting from specific actions taken by the recipient (absolute total, average per respondent and average per recipient);
(c) points arising from particular responses to specific questions (absolute total, average per respondent and average per recipient).

The results allows the user to track the overall success of a particular communication project at the time.

Information derived from the answers to specific questions (the "research response" category) may be correlated against data from third party systems (such as sales values) on a respondent by respondent basis, in order to determine which opinions and experiences of each individual have an actual effect on a particular parameter (for example sales). Thus, the user may report response data (eg customer satisfaction data) against data from a third party system (eg sales). This allows, for example, dissatisfied customers to be ranked according to the value of their custom, and hence a prioritised list may be produced showing which customers should be attended to first.

For example, the following data may be gathered:|

| **Respondent** | **Month** | **Response to Question 1 (eg "lead times experienced")** | **Sales Value (from external system)** |
|---|---|---|---|
| Customer A | Jan | 5 points | 100 |
| Customer A | Feb | 5 points | 105 |
| Customer A | Mar | 5 points | 99 |
| Customer A | Apr | 4 points | 102 |
| Customer A | May | 3 points | 100 |
| Customer A | Jun | 3 points | 85 |
| Customer A | Jul | 2 points | 70 |
| | | | |
| | **Correlation** | **No time difference** | **0.81** |
| | **Correlation** | **1 month time difference** | **0.87** |
| | **Correlation** | **2 months time difference** | **0.99** |
| | | | |
| Customer B | Jan | 5 points | 50 |
| Customer B | Feb | 3 points | 52 |
| Customer B | Mar | 5 points | 45 |
| Customer B | Apr | 4 points | 50 |
| Customer B | May | 3 points | 50 |
| Customer B | Jun | 5 points | 55 |
| Customer B | Jul | 4 points | 35 |
| | | | |
| | **Correlation** | **No time difference** | **-0.02** |
| | **Correlation** | **1 month time difference** | **-0.30** |
| | **Correlation** | **2 months time difference** | **0.32** |

These results indicate the following:
1. Customer A (high spender) is strongly driven in purchasing decisions by lead times.
2. Customer B (medium spender) is not driven by lead times.
The software will run this process as a program and will automatically update the profile of the individual with their key driver(s). Hence, using the example above, and expanding it with additional examples, Customer A's profile would be updated with:

| **Individual** | **Driver** | **Correlation with Sales** |
|---|---|---|
| Customer A | Lead Times | High |
| Customer A | Price | Low |
| Customer A | Product feature | Medium |

The information learned here is then summarised based on category indicators held against each customer (eg job title, industry sector, location) in order to determine the correlation of categories of customers against the third party system data. For example this could reveal:

| **Category 1** | **Category 2** | **Driver** | **Correlation with Sales** |
|---|---|---|---|
| IT Managers | South | Lead Times | High |
| IT Managers | North | Lead Times | Low |
| IT Managers | South | Price | Medium |
| IT Managers | North | Price | High |

This correlation method is also applied to results relating to the action taken by the recipient in order to determine which actions lead to measurable results. Such results are also automatically updated onto the individual's profile. An example would be:

| **Individual** | **Driver** | **Correlation with Sales** |
|---|---|---|
| Customer A | Click-through | Low |
| Customer A | Request Call | High |
| Customer A | Request Brochure | Medium |

The software now knows that Customer A is driven by lead times, and that the most likely way of making a sale is to get the customer to request a call.

The results may also be correlated against specific characteristics of the mailings (eg timing) on a recipient by recipient basis, in order to determine the characteristics of the most successful mailings for each recipient. For example, using data similar to those given above, the software may conclude that the best way to get customer A to request a call (and therefore have the most chance of making a sale) is to send documents on Friday afternoons. The customer's profile is automatically updated accordingly.

Instead of or in addition to scoring, the user may associate targets for each activity, follow-on activity or individual question. For example, the target for the question "were the goods supplied on time?" may be "greater than 80%". The results achieved may be compared with the targets in reports. Alternatively, the system may auto-generate a message or warning if the target has not been achieved.

The system allows the user to set up condition formulae, which can apply tests against the analysed data in order provide a further level of automation. When the condition arises, the user is automatically notified. One aim of this functionality is to enable the software to predict which audience members the user may be about to lose, when and why. To take an example, a condition formula may be set up to monitor when high-spending customers become dissatisfied with certain aspects of the service ("the drivers") which are important to them and which other members of their group have demonstrated will lead to eg loss of custom if not rectified.

Once appropriate conditions have been set up, current audience responses can be monitored to determine which members of the audience start to display the signs which might lead, for example, to the sales drop-off point. The system will report to the user who the members of the audience are, which condition has been detected and for how long. It will for example report whether this is the first occurrence, second occurrence etc. for this particular customer. The system also reports what time delay within the calculation of the correlation coefficients results in the highest correlation; this provides the user with some indication as to how quickly the problem has to be rectified before the sales start to drop off.

Typically, a scheduled program will run regularly (for example overnight) to search for occurrences of each condition, and to report the results to the user, for example by e-mail.

In order to set up a condition formula, the user goes through an operation very similar to that shown in Figure 7 in relation to triggers. Indeed, conditions formulae and triggers may be treated in substantially the same way by the software, with the same options being selectable by the users in each case. The only difference would be that a trigger generates the mailing of a document, either internally or externally, whereas a condition formula simply reports the occurrence of that condition to the user who will then decide, on a case by case basis, which further action is called for.

One part of the software analyses the responses of lost audience, as well as third party data, in order to correlate the results and to determine any patterns which led to the audience being lost. When such patterns are determined, they may be defined as condition formulae, in order to start detecting when that pattern emerges in any other members of the audience. This allows the software to signal when further members of the audience start to show similar patterns and therefore to predict that these audience members may be lost at some point in the future. The software also records how far down the path the audience member is, in order to predict when they will be lost, and also to provide information describing why they may be lost. The goal is of course to allow the user to take pre-emptive action to prevent the loss.

Based on the results of previous projects, the software can predict the likely outcome of a new project (for example a marketing campaign) so that the user can be prepared for the resulting responses from the target audience - for example how many calls to expect and how many goods to expect to sell.

Finally, additional functionality is provided for automated news distribution. This feature allows multiple users or departments 24 (Figure 1) within an organisation to input their business news to the system (for example improvements in customer support). The software then automates the distribution of the news to those members of the audience to which it is relevant. The system also takes account of previous projects and looks for patterns which led to a successful outcome with each recipient, for example a response received from the recipient, or a purchase within the next few days. Using this information, the system executes new campaigns in similar styles to previous campaigns which led to success. For example, by matching the category of the news with the members of the audience to which it is relevant; by sending the document on the most responsive day and at the most responsive time of day; or by formatting the content (eg summary or detail) to that which is most likely to lead to a positive response from each individual audience member.

## Claims

1. An automated electronic communication system for connection via a network with a plurality of correspondents, the system including a communications server for automatically generating and forwarding to a correspondent a series of personalised messages under control of a plurality of user-defined triggers.

2. An automated electronic communication system as claimed in claim 1 in which each message is associated with a trigger which defines when the message is to be sent.

3. An automated electronic communication system as claimed in claim 2 in which the trigger causes the message to be sent on the occurrence of a trigger event, either automatically generated by the system or derived from information received from an external source.

4. An automated electronic communication system as claimed in claim 3 in which the trigger event is determined in dependence upon the content of previous messages received from the correspondent in response to a message or messages sent.

5. An automated electronic communication system as claimed in claim 3 or claim 4 in which the trigger event is determined in dependence upon the presence or absence of previous messages received from the correspondent in response to a message or messages sent.

6. An automated electronic communication system as claimed in any one of claims 3 to 5 in which the trigger event is determined in dependence upon stored correspondent profile data.

7. An automated electronic communication system as claimed in any one of claims 3 to 6 in which the trigger event is determined in dependence upon externally-provided time-variant data, for example stock exchange data, meteorological data and so on.

8. An automated electronic communication system as claimed in any one of claims 2 to 7 in which the trigger is capable of causing the message to be sent on a particular day, at a user-selectable and correspondent-specific time.

9. An automated electronic communication system as claimed in any one of the preceding claims in which each message is defined by a message template including fields to be populated with time-variant data, or controls for automatically modifying the document in dependence upon time-variant information, or both.

10. An automated electronic communication system as claimed in any one of the preceding claims when dependent upon claim 2 in which a user may define cascading message sequences by associating with each message a sub-message, with each sub-message a sub-sub-message, and so on.

11. An automated electronic communication system as claimed in claim 10 in which each message may have a plurality of sub messages associated with it, each sub-message may have a plurality of sub-sub-messages, and so on.

12. An automated electronic communication system as claimed in claim 10 or claim 11 in which the trigger for a sub-message is not enabled until the associated message has been sent, the trigger for a sub-sub-message is not enabled until the associated sub-message has been sent, and so on.

13. An automated electronic communication system as claimed in any one of claims 10 to 12 in which the sub-message, sub-sub-message and so on may be sent not to the correspondent but elsewhere.

14. An automated electronic communication system as claimed in any one of the preceding claims including user-definable scoring means for determining the level of success or otherwise of previous messages sent to a correspondent.

15. An automated electronic communication system as claimed in any one of the preceding claims including external data correlation means for correlating the information from responses received from or action taken by a correspondent against selected data from external sources, for example customer sales data.

16. An automated electronic communication system as claimed in any one of the preceding claims including message correlation means for correlating information from the responses received from or actions taken by a correspondent against information from previous messages sent.

17. An automated electronic communication system as claimed in claim 16 in which the message correlation means correlates the timing of messages sent with information from the responses received or the actions taken by the correspondent.

18. An automated electronic communication system as claimed in any one of the preceding claims including user-definable condition formulae for notifying a user of the system when a particular condition or combination of conditions has occurred in respect of a specific correspondent.

19. An automated electronic communication system as claimed in claim 18 in which the user-definable condition warns the user when a correspondent may soon be lost.

20. An automated electronic communication system as claimed in any one of the preceding claims in which the server receives items of news for distribution, creates personalised messages for each correspondent or group of correspondents, including only items likely to be of interest to the recipient, and distributes the news via a plurality of messages.

21. A method of automatically communicating with a plurality of remote correspondents including automatically generating and forwarding to each correspondent a series of personalised messages under control of a plurality of user-defined triggers.

22. A method for connection via a network with a plurality of correspondents, the method including generating and forwarding to a correspondent a series of personalised messages under control of a plurality of user-defined triggers.

23. A method as claimed in claim 22 including associating each message with a trigger which defines when the message is to be sent.

24. A method as claimed in claim 23 in which the trigger causes the message to be sent on the occurrence of a trigger event.

25. A method as claimed in claim 24 involving determining the trigger event in dependence upon the content of previous messages received from the correspondent in response to a message or messages sent.

26. A method as claimed in claim 24 or claim 25 involving determining the trigger event in dependence upon the presence or absence of previous messages received from the correspondent in response to a message or messages sent.

27. A method as claimed in any one of claims 24 to 26 involving determining the trigger event in dependence upon stored correspondent profile date.

28. A method as claimed in any one of claims 24 to 27 involving determining the trigger event in dependence upon externally-provided time-variant data, for example stock exchange data, meteorological data and so on.

29. A method as claimed in any one of claims 23 to 28 in which the trigger is capable of causing the message to be sent on a particular day at a user-selectable and correspondent-specific time.

30. A method as claimed in any one of claims 22 to 29 in which each message is defined by a message template including fields to be populated with time-variant data, or controls for automatically modifying the document in dependence upon time-variant information or both.

31. A method as claimed in any one of claims 23 to 30, when dependent upon claim 23 in which a user may define cascading message sequences by associating with each message a sub-message, with each sub-message a sub-sub-message, and so on.

32. A method as claimed in claim 31 in which each message may have a plurality of sub-messages associated with it, each sub-message may have a plurality of sub-sub-messages, and so on.

33. A method as claimed in claim 31 or claim 32 in which the trigger for a sub-message is not enabled until the associated message has been sent, the trigger for a sub-sub-message is not enabled until the associated sub-message has been sent, and so on.

34. A method as claimed in any one of claims 31 to 33 in which the sub-message, sub-sub-message and so on may be sent not to the correspondent but elsewhere.

35. A method as claimed in any one of claims 22 to 34 including determining the level of success or otherwise of previous messages sent to a correspondent.

36. A method as claimed in any one of claims 22 to 35 including correlating the information from responses received from or action taken by a correspondent against selected data from external sources, for example customer sales data.

37. A method as claimed in any one of claims 22 to 36 including correlating information from the responses received from or actions taken by a correspondent against information from previous messages sent.

38. A method as claimed in claim 37 including correlating the timing of messages sent with information from the responses received or the actions taken by the correspondent.

39. A method as claimed in any one of claims 22 to 38 including defining condition formulae for notifying a user of the system when a particular condition or combination of conditions has occurred in respect of a specific correspondent.

40. A method as claimed in claim 39 in which the condition warns the user when a correspondent may soon be lost.

41. A method as claimed in any one of claims 22 to 40 in which the server receives items of news for distribution, creates personalised messages for each correspondent or group of correspondents, including only items likely to be of interest to the recipient, and distributes the news via a plurality of messages.

42. A method as claimed in any one of claims 22 to 41 including receiving items of news for distribution, creating personalised messages for each correspondent or group of correspondents, including only items likely to be of interest to the recipient and distributing the news via a plurality of messages.
